# EUROPEAN PATENT APPLICATION

(11) **EP 2 586 298 A1**
(43) Date of publication of application: **01.05.2013**
(21) Application number: 12190505.3
(22) Date of filing: 30.10.2012
(51) Int. Cl.: A01K 15/02

(54) **Body-weight supported walking training machine for animals**

(30) Priority: 31.10.2011 JP 2011238763
(71) Applicant: Sakai Medical Co., Ltd., Tokyo (JP)
(72) Inventor: Arakawa, Koji, Tokyo (JP); Ito, Hidetoshi, Tokyo (JP)
(74) Representative: Beetz & Partner

(57) **Abstract**

A body-weight-supported walking training machine for animal (1) includes a frame portion (2) including wheels, a support means (9) which suspends and supports an animal, a wire (10) which is attached to the frame portion (2) in a relatively movable manner and has a hanging end portion capable of being connected to the support means (9), and a body weight support level adjustment means (22, 23, 26) which can move up and down a height position of the end portion of the wire (10) so as to adjust a weight reduction amount of the animal.

## Description

### BACKGROUND OF THE INVENTION

### Field of the Invention

The present invention relates to a body-weight-supported walking training machine for animal used in standing training or walking training for rehabilitation of a dog or other animal that cannot walk due to a disease or an injury.

### Description of Related Art

Recent years, a lifetime of a pet animal such as a dog or a cat has been increased due to advanced medicine or improvement of breeding environment. Along with this, dogs and the like that cannot stand or walk have been increased, suffered from various diseases such as hernia. In order to aid such an animal to walk or to undergo rehabilitation, there are developed walking training machines for animal.

For instance, a rehabilitation apparatus described in JP-A-2010-17090 includes an arm rotatable about a mast standing upright on a pedestal, and a wire hanging from the tip of the arm. Further, a suspension portion attached to the wire holds a pet such as a dog. The suspension portion enfolds a body of the dog from an abdominal region, and two points thereof on a foreleg side and a hind leg side are suspended by connection belts connected to the wire.

In the rehabilitation apparatus, a suspension force by an air cylinder or a constant load spring is adjusted in accordance with a weight of the dog to be a half of the weight of the dog for body weight support. In the state where the weight is reduced by half, the dog is let to walk around the mast.

However, the walking training machine for pet disclosed in JP-A-2010-17090 is used for training the dog to walk around the mast while the dog is attached to the wire hanging from the tip of the rotation arm. In the case of this structure, the dog may walk in an arbitrary direction to wander so that it cannot walk straight. Therefore, it is difficult to carry out safe and secure walking training. In addition, a cross-shaped base is attached to the pedestal, and it is difficult to move the walking training machine.

### SUMMARY OF THE INVENTION

The present invention is made in view of the above-mentioned situation, and it is an object thereof to provide a body-weight-supported walking training machine for animal with which an animal can be trained to walk without wandering, and a body weight support level for the walking animal can be adjusted arbitrarily.

The body-weight-supported walking training machine for animal according to the present invention includes a frame portion having a wheel, a support means which suspends and supports an animal, a wire which is attached to the frame portion in a relatively movable manner and has a hanging end portion capable of being connected to the support means, and a body weight support level adjustment means which can move up and down a height position of the end portion of the wire so as to adjust a weight reduction amount of the animal.

According to the present invention, the support means which suspends and supports the animal such as a pet is connected to the end portion of the wire, and the height position of the wire end portion can be moved up and down by the body weight support level adjustment means. Therefore, in the present invention, it is possible to reduce a part of the weight of the animal by the body weight support level adjustment means so as to aid the animal to walk easily. Further, by letting the animal to walk in an appropriate direction such as a straight line direction with reduced weight while moving the frame portion in the same direction, it is possible to let the animal to walk and exercise while suppressing movement of the animal in an unexpected direction to be an obstacle for rehabilitation. It is preferred that the support means should have a structure in which support connection belts for supporting the animal is retained in a dispersed manner, and thus it is possible to prevent a load from being concentrated in a part of the animal (usually in a state wearing a harness) by the connection belts.

In addition, it is preferred that the body weight support level adjustment means should include an operation handle for adjusting a height position of the wire end portion connected to the support means, a moving pulley around which the wire is wound so as to move up and down for adjusting a height position of the end portion of the wire in accordance with an operation of the operation handle, and a body weight support level measuring instrument which measures a body weight support level of the wire for the animal.

When operating the operation handle while checking a body weight support level by the body weight support level measuring instrument, a height position of the end portion of the wire is moved up and down via the moving pulley, and hence the body weight support level of the animal can be adjusted and set by moving up and down the support means.

In addition, the frame portion includes two columns and a beam portion connecting the two columns, a lateral movement correction bar is attached to each of the two columns, and the animal suspended and supported by the support means is capable of being supported from the side by a connection belt connected to the lateral movement correction bar.

When the frame portion is moved in a direction along which the animal should walk, if the animal is supported by the support means only from above, the animal may wander and twist the body so that the rehabilitation is badly affected. Concerning this point, in this structure, the animal suspended and supported by the support means is also supported from the side by the connection belt connected to the lateral movement correction bar. Therefore, the movement direction of the animal can be restricted, and hence the walking training can be performed in safe.

In addition, the wire may include an intermediate wire that is detachable.

If the animal in the walking training is a large animal, the intermediate wire is removed so that the wire is connected to the support means, and hence, it is easy to support a difference of the animal size.

In addition, it is preferred that the body-weight-supported walking training machine for animal should further include a stage which is attached to the frame portion in a detachable manner and on which the animal is placed.

Thus, a veterinarian and a therapist can easily examine the animal standing upright on the stage in a convenient manner.

In addition, it is possible there is disposed a movable table on which the animal is placed between the two columns of the frame portion.

Thus, a veterinarian and a therapist can easily examine the animal standing upright on the table.

In addition, it is possible to dispose an electric treadmill on the floor between the two columns of the frame portion. By disposing the electric treadmill between the two columns of the frame portion so as to perform the walking training of the animal, it is possible to perform the rehabilitation without moving the frame portion.

Note that it is preferred that the animal suspended by the support means should wear a harness. It is preferred that the harness should be a corset type supporting member that enfolds an abdominal region of the animal, and that belt-like members are disposed for supporting the weight in a dispersed manner between a foreleg side and a hind leg side. Thus, the weight of the animal to be suspended can be supported by divided supporting portions between front and rear sides.

According to the present invention, it is possible to provide a body-weight-supported walking training machine for animal that can perform walking training of an animal without letting it wander and can adjust a body weight support level of the animal in walking at an arbitrary level.

### BRIEF DESCRIPTION OF THE DRAWINGS

Fig. 1 is a perspective view illustrating a body-weight-supported walking training machine for animal according to an embodiment of the present invention.
Fig. 2 is a perspective view of a support bar illustrated in Fig. 1.
Fig. 3 is a diagram for explaining an up and down movement of a wire suspending the support bar.
Fig. 4 is a diagram illustrating an up and down mechanism of a moving pulley disposed to a column of a gate-shaped frame.
Fig. 5 is a diagram viewed from a direction perpendicular to Fig. 4, illustrating the up and down mechanism of the moving pulley.
Fig. 6 is a diagram in which a table on wheels is disposed to the gate-shaped frame of the body-weight-supported walking training machine for animal.
Fig. 7 is a diagram in which a stage is attached to the gate-shaped frame of the body-weight-supported walking training machine for animal.

### DETAILED DESCRIPTION OF THE PREFERRED EMBODIMENTS

Hereinafter, a body-weight-supported walking training machine for animal according to an embodiment of the present invention is described with reference to the attached drawings.

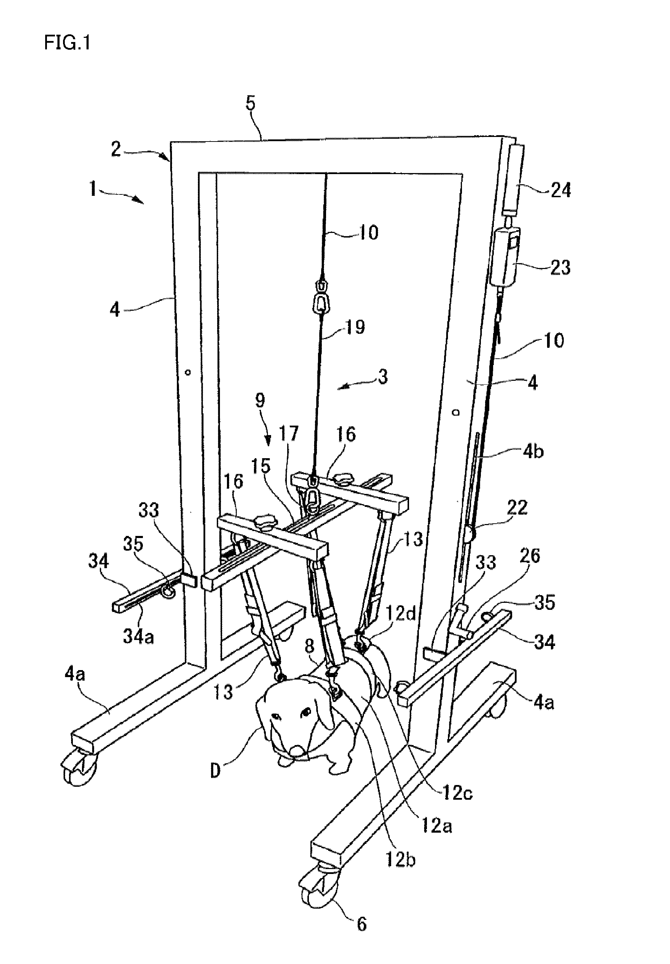

A body-weight-supported walking training machine for animal 1 illustrated in Fig. 1 includes a gate-shaped frame 2 (an example of a frame portion of the present invention) and an animal holding fixture 3 suspending an animal such as a dog from the frame 2 for walking training.

The gate-shaped frame 2 includes two columns 4 and a beam portion 5 connecting upper ends of the columns. On a lower end of each of the columns 4, there is formed a base portion 4a having a substantially a rod shape extending in a front and rear direction, and wheels 6 are attached to the lower face of the base portion 4a. The animal holding fixture 3 includes a harness 8 which enfolds a body of an animal such as a dog D, a support bar 9 (an example of a support means of the present invention) connected to a plurality of connection belts 13, and a wire 10. Note that the animal is not limited to the dog but may be other animal such as a cat or a rabbit. In addition, a size of the animal may be arbitrary size including a large size, a middle size, and a small size. Further, in some cases, the harness 8 and the support bar 9 may be constituted as one unit.

The harness 8 includes a corset type body portion 12a which enfold the abdominal region toward the back so as not to apply load on the backbone of the dog D, and belt-like members 12b and 12c which are attached to the body portion 12a on a foreleg side and on a hind leg side and are disposed before and after the abdominal region. A plurality of hanger fixtures 12d are attached to the upper part of the harness 8 in a dispersed manner. These hanger fixtures 12d are engaged with hooks of connection belts 13 hanging from the support bar 9.

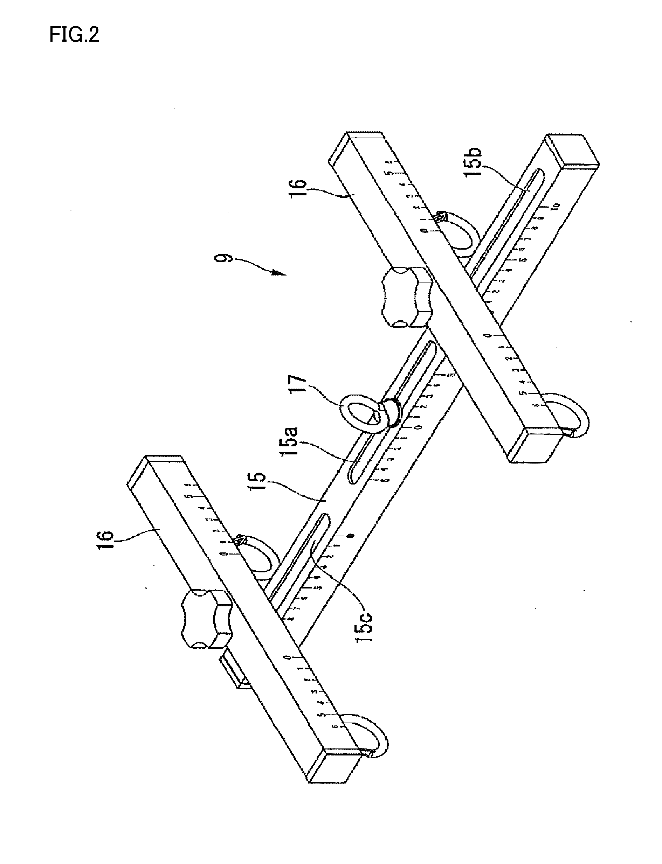

Fig. 2 is a perspective view of the support bar 9. The support bar 9 includes a main guide member 15 extending in a direction substantially perpendicular to the beam portion 5, and two sub guide members 16 perpendicular to the main guide member 15. Three guide grooves 15a, 15b, and 15c are formed on the upper face of the main guide member 15. An engaging member 17 for connecting to the wire 10 is attached to the middle guide groove 15a in a slidable manner and in a fixable manner. The sub guide members 16 are attached to the guide grooves 15b and 15c on both sides, respectively in a slidable manner and in a fixable manner. In addition, a guide groove (not shown) is formed in the lower face of the sub guide member 16. Further, an upper end ring of the connection belt 13 disposed on each side of the main guide member 15 is connected to each of the guide grooves in a slidable manner and in a fixable manner.

Therefore, the two sub guide members 16 can slide and can be fixed along the guide grooves 15b and 15c with respect to the main guide member 15. In addition, the two connection belts 13 disposed to each of the sub guide members 16 can slide and can be fixed on each side of the main guide member 15 along the guide groove of each of the sub guide members 16. Because the connection belt 13 connected to the hanger fixture 12d of the harness 8 can slide and can be fixed along each guide groove, a position of the connection belt 13 can be adjusted according to a body size of the dog D held by the harness 8 and a position of the hanger fixture 12d. As a result, the dog D can walk without stress by the connection belt 13.

In addition, because the engaging member 17 can slide and can be fixed along the middle guide groove 15a, it is possible to adjust a balance of a body weight support level between forelegs and hind legs of the dog D held by the harness 8.

An intermediate wire 19 is connected to the lower part of the wire 10 in a detachable manner. This intermediate wire 19 is included in the wire 10. The engaging member 17 of the support bar 9 engages the intermediate wire 19 in a detachable manner, which is disposed to the lower end of the wire 10. By detaching the intermediate wire 19 so as to connect an end hook of the wire 10 directly to the engaging member 17 of the support bar 9, the dog D held by the support bar 9 and the harness 8 is suspended in the upper part of the column 4.

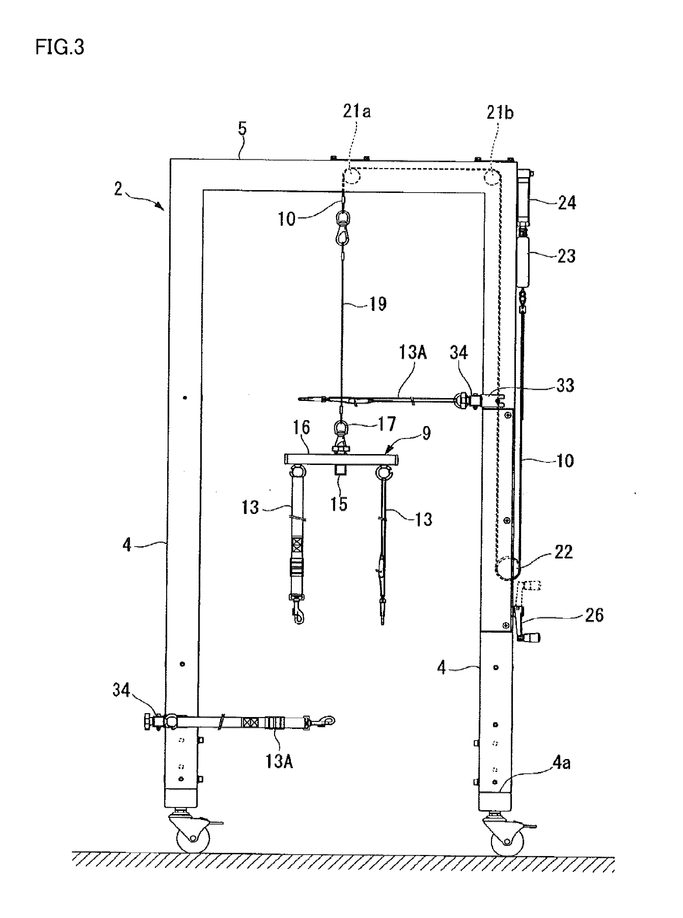

In addition, in Fig. 3, the wire 10 connected to the intermediate wire 19 extends upward and wound around a roller 21a in the beam portion 5 of the gate-shaped frame 2, and further extends downward in one of the columns 4 via a roller 21b in the column 4. Then, the wire 10 is wound around a moving pulley 22 supported in a manner movable up and down in an up and down groove 4b (see Fig. 1) formed in the middle part in the height direction of the column 4, and extends upward outside the column 4 so as to be connected to a shock absorber 24 via a body weight support level adjusting weigher 23 attached to the vicinity of the upper end of the column 4.

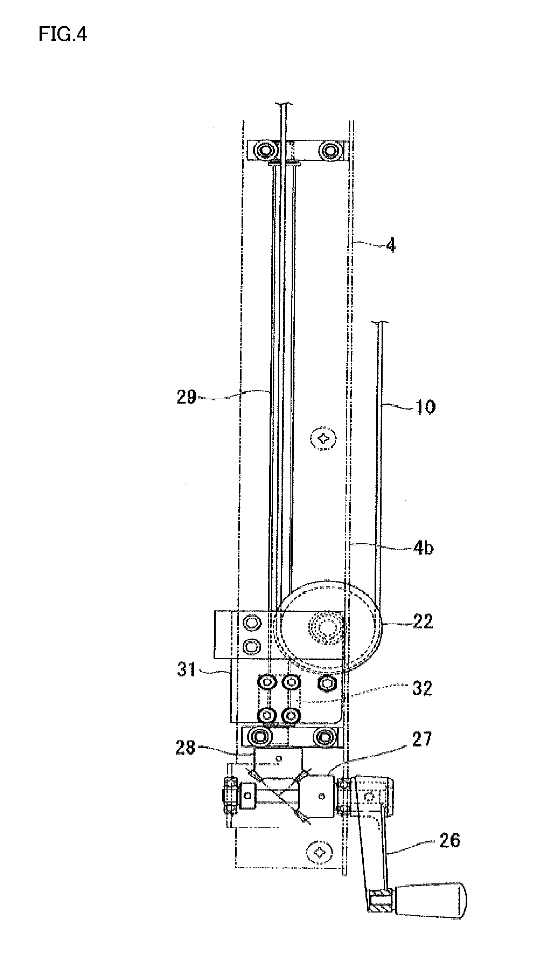

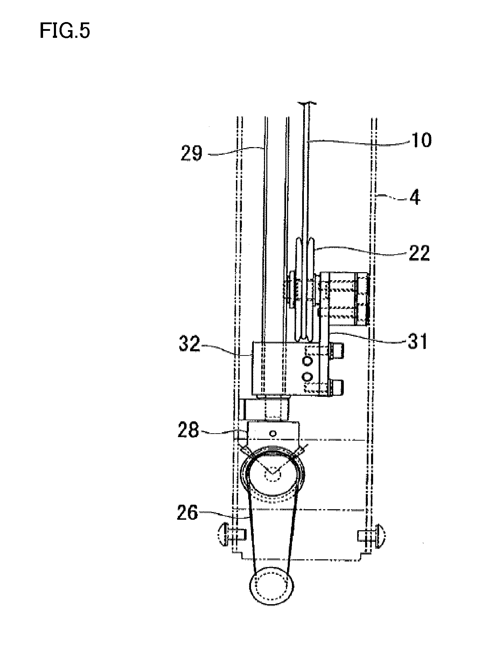

In addition, Figs. 4 and 5 illustrate an internal structure of the column 4 in which the wire 10 is disposed. In Figs. 4 and 5, an operation handle 26 for adjusting body weight support level for the dog D is attached to the lower side of the up and down groove 4b of the column 4. A first bevel gear 27 is connected to a horizontal shaft of the operation handle 26, and a second bevel gear 28 is engaged with the first bevel gear 27. A threaded shaft 29 is integrally connected to the second bevel gear 28 and extends in the up and down direction in the column 4. A trapezoidal thread is formed helically on the outer circumferential surface of the threaded shaft 29. When the operation handle 26 is rotated forward or backward, the threaded shaft 29 is rotated via the first and second bevel gears 27 and 28.

On the other hand, the moving pulley 22 is supported by a bracket 31 in a rotatable manner. A rack member 32 having teeth (not shown) is fixed to an end portion of the bracket 31, and the teeth of the rack member engages with the trapezoidal thread of the threaded shaft 29. Therefore, when the operation handle 26 is operated so that the threaded shaft 29 rotates, the bracket 31 including the rack member 32 engaging with the trapezoidal thread moves up and down, and the moving pulley 22 also moves up and down together with the bracket 31 in the up and down groove 4b of the column 4.

Further, when the moving pulley 22 moves up, the wire 10 and the support bar 9 connected to the same are moved down. When the moving pulley 22 moves down, the wire 10 and the support bar 9 connected to the same are moved up. Therefore, when the support bar 9 is moved up and down, a weight reduction amount of the dog D held by the harness 8, namely a body weight support level can be adjusted to increase or decrease. This body weight support level can be measured by the body weight support level adjusting weigher 23. When the body weight support level is adjusted, even if a large weight is applied to the wire 10, its impact can be reduced by the shock absorber 24.

In addition, in Figs. 1 and 3, a lateral movement correction bar 34 is fixed to each of the columns 4 of the gate-shaped frame 2 in the middle part in the height direction. A guide groove 34a is formed in an inner face of the lateral movement correction bar 34. The lateral movement correction bar 34 has a pair of protruding plates 33 protruding from the inner face in the middle part so as to sandwich the column 4, and is engaged with a threaded hole of the column 4 to be fixed via the protruding plate 33.

An attachment fixture 35 for attaching another connection belt 13A is disposed in the guide groove 34a in a slidable manner, and the connection belt 13A connected to the attachment fixture 35 can be connected to the hanger fixture 12d of the harness 8.

The four connection belts 13 attached to the support bar 9 are connected to the hanger fixtures 12d of the harness 8 from above, and the connection belts 13A attached to the lateral movement correction bars 34 on both side portions are connected to the hanger fixtures 12d of the harness 8. Thus, it is possible to prevent the dog D from wandering or shifting in a direction apart from the gate-shaped frame 2, or twisting the body, and hence it is possible to correct so that the dog can walk straight.

Note that as illustrated in Fig. 3, the lateral movement correction bar 34 can be attached to the column 4 selectively at different height positions, for example, at one or more positions in the up and down direction of the column 4 so as to follow the adjustment of the height position of the harness 8.

The body-weight-supported walking training machine for animal 1 according to this embodiment has the structure described above, and actions thereof are as follows.

As illustrated in Fig. 1, the lower end of the wire 10 is attached to the engaging member 17 of the support bar 9 via the intermediate wire 19 and the hook. Further, total four connection belts 13, for example, extending from the two sub guide members 16 of the support bar 9 are connected to the hanger fixtures 12d of the harness 8 for holding the dog D. By rotating the operation handle 26 in this state, the bracket 31 and the moving pulley 22 are moved up and down as a unit. Note that the rotation of the operation handle 26 causes the rotation of the threaded shaft 29 in one of the columns 4 via the first and second bevel gears 27 and 28, so that the rack member 32 engaging with the trapezoidal thread of the threaded shaft 29 is moved up and down. Thus, the bracket 31 and the moving pulley 22 are moved up and down as a unit.

When the moving pulley 22 is moved up and down, the wire 10 supporting the weight of the dog D moves up and down. Therefore, a load applied to the wire 10 is adjusted to increase and decrease, and hence the body weight support level corresponding to a weight supported by the wire 10 is set. This body weight support level is measured by the body weight support level adjusting weigher 23, and the impact can be reduced by the shock absorber 24 even if the load changes.

Therefore, by adjusting the body weight support level using the operation handle 26, a weight of the dog D suspended by the wire 10 can be reduced for performing the walking training of the dog D. By moving the gate-shaped frame 2 in the same direction as the walking direction of the dog D, the dog D can walk with a guide of the two columns 4 of the gate-shaped frame 2 in a state where the weight thereof is reduced even if it is suffered from a disease such as hernia.

In addition, in the walking, the dog D may wander or may be not able to walk upright. In this case, it is preferred to attach the lateral movement correction bars 34 to both the columns 4 of the gate-shaped frame 2, and to connect the connection belts 13A attached to the lateral movement correction bar 34 to the hanger fixtures 12d of the harness 8. Thus, if the dog D is laterally wandering from the straight line direction or twisting the body, the dog is pulled by the connection belt 13A to the left or right. Therefore, it is possible to let the dog D walk upright.

Note that if the small dog D is replaced with a large dog to perform the walking training, for example, it is preferred to remove the intermediate wire 19 included in the wire 10 so that the hook of the wire 10 is directly connected to the engaging member 17 of the support bar 9. In addition to this, the wire 10 may be moved up and down by the operation handle 26. Thus, it is possible to hold the large dog in a body-weight-supported state for the walking training. In this way, an adjustment amount can be smaller than a case where a suspension position of the wire 10 is adjusted only by operating the operation handle 26, and the adjustment is facilitated.

In this way, even if the dog D is a small dog, a middle size dog, or a large dog, a suspension height of the wire 10 can be easily adjusted for performing the walking training.

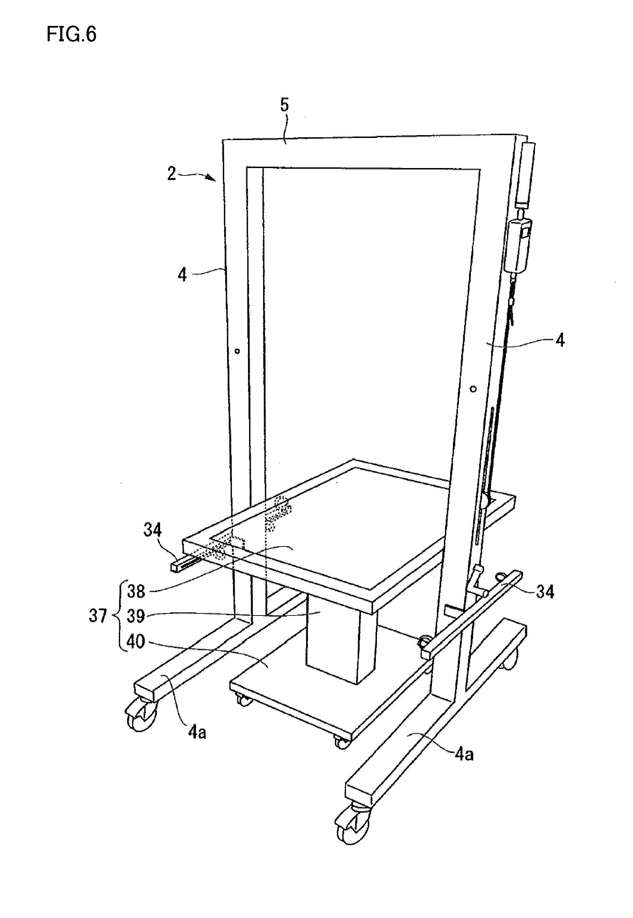

In addition, as illustrated in Fig. 6, it is possible to dispose a movable table 37 between the columns 4 of the gate-shaped frame 2. The movable table 37 is constituted of a table 38, a support frame 39, and a base portion 40. Wheels are attached to an under face of the base portion 40.

When the dog D attached to the wire 10 of the gate-shaped frame 2 is placed on the table 38 of the movable table 37 for a veterinarian or a therapist to examine, by removing the intermediate wire 19 from the wire 10, and/or by operating the operation handle 26, the dog D suspended by the wire 10 can be held in an upright state on the movable table 37. In addition, it is easy to move because the movable table 37 can move together with the gate-shaped frame 2.

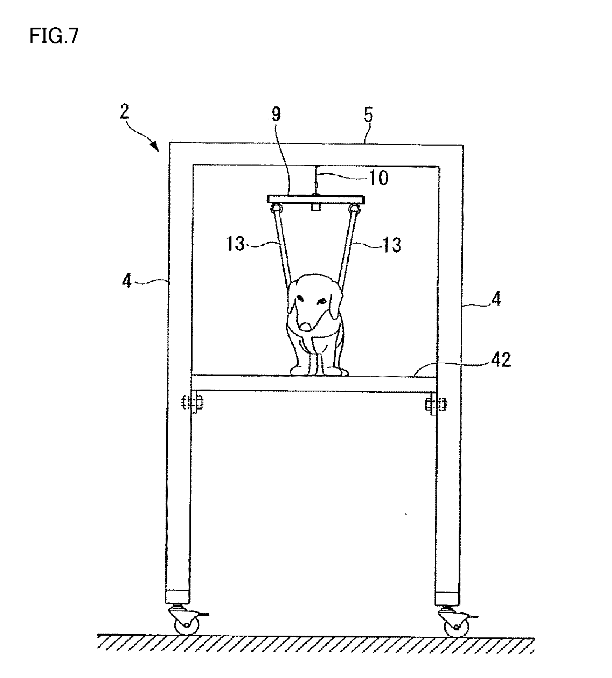

In addition, instead of the above-mentioned movable table 37, as illustrated in Fig. 7, a stage 42 may be fixed to the columns 4 on both sides at a middle position in the height direction with a bolt or the like. In this case, too, by removing the intermediate wire 19 from the wire 10, and/or rotating the operation handle 26 to move the wire 10 up and down, the dog D suspended by the wire 10 can be lifted up on the stage 42 so as to be held in an upright state.

In these cases, because the dog D can be held at a position higher than the floor by the movable table 37 or the stage 42, it is easy for a veterinarian or a therapist to examine the same.

Note that the stage 42 may have a structure for changing the angle with respect to the gate-shaped frame 2. With this structure, it is possible to reduce possibility that a veterinarian or a therapist examining the animal is forced to have a constrained posture or to expand methods of standing and training animals.

In addition, an electric treadmill may be disposed on the floor between the columns 4 of the gate-shaped frame 2. For instance, if the dog D cannot walk by itself, the walking training can be performed by letting the dog D walk on the floor of the electric treadmill.

As described above, according to the body-weight-supported walking training machine for animal 1 of this embodiment, the animal such as the dog D is supported by the harness 8, and can be supported by the wire 10 via the connection belt 13 and the support bar 9. By operating the operation handle 26, the harness 8 can be lifted up via the wire 10 and the moving pulley 22 that are moved up and down, and hence a part of the weight of the dog D can be supported so that the weight is reduced and adjusted. Therefore, according to the body-weight-supported walking training machine for animal 1, the walking training of the dog D can be easily performed by supporting a part of the weight of the dog D. In addition, because the body weight support level can be measured by the body weight support level adjusting weigher 23 in the body-weight-supported walking training machine for animal 1, it is possible to exactly set the body weight support level of the dog D for correct walking training.

Further, using the body-weight-supported walking training machine for animal 1, the dog D with the weight reduced is let to walk in an appropriate direction such as a straight line direction, while the gate-shaped frame 2 is moved in the same direction. Thus, the walking training can be performed safely.

In addition, the body-weight-supported walking training machine for animal 1 can suspend the harness 8 from above by the connection belts 13 of the support bar 9, and can support the harness 8 from both sides by different connection belts 13A connecting the harness 8 and the lateral movement correction bars 34 disposed on both sides. Therefore, in the walking training, it is possible to securely prevent the dog D from shifting, wandering, or twisting the body so that the walking training can be performed in an appropriate upright posture. In other words, using the body-weight-supported walking training machine for animal 1, rehabilitation can be performed in safe.

In addition, by disposing the movable table 37 between the columns 4 of the gate-shaped frame 2, or by fixing the stage 42 to the column 4, it is possible to place the dog D during the walking training at a high position so that a veterinarian or a therapist can easily and appropriately examine the dog D. Further, when the dog D is placed on the movable table 37 or the stage 42, by removing the intermediate wire 19 connected between the wire 10 and the support bar 9, the dog D can be suspended more rapidly than a case where the wire 10 is moved up only by rotating the operation handle 26.

In addition, by disposing the electric treadmill between the columns 4, it is possible to perform the walking training of the dog D that can hardly walk by itself.

Note that the body-weight-supported walking training machine for animal 1 according to the present invention is not limited to the above-mentioned embodiment but can be modified appropriately within the scope of the spirit of the present invention without deviating from the same.

For instance, the movable table 37 or the stage 42 is disposed for examining the dog D in the embodiment described above, but it is possible to examine the same on the floor.

It is not always necessary to use the lateral movement correction bar 34 when performing the walking training.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A body-weight-supported walking training machine for animal comprising:
a frame portion (2) including wheels;
a support means (9) which suspends and supports an animal (D);
a wire (10) which is attached to the frame portion (2) in a relatively movable manner and has a hanging end portion capable of being connected to the support means (9); and
a body weight support level adjustment means (22, 23, 26) which can move up and down a height position of the end portion of the wire (10) so as to adjust a weight reduction amount of the animal (D).

2. The body-weight-supported walking training machine for animal according to claim 1, wherein the body weight support level adjustment means (22, 23, 26) includes
an operation handle (26) for adjusting a height position of the end portion of the wire (10),
a moving pulley (22) around which the wire is wound so as to move up and down for adjusting a height position of the end portion of the wire (10) in accordance with an operation of the operation handle (26), and
a body weight support level measuring instrument (23) which measures a body weight support level of the wire for the animal (D).

3. The body-weight-supported walking training machine for animal according to claim 1 or 2, wherein
the frame portion (2) includes two columns (4) and a beam portion (5) connecting the two columns (4),
a lateral movement correction bar (34) is attached to each of the two columns, and
the animal (D) suspended and supported by the support means (9) is capable of being supported from the side by a connection belt (13A) connected to the lateral movement correction bar (34).

4. The body-weight-supported walking training machine for animal according to any one of claims 1 to 3, wherein the wire (10) includes a detachable intermediate wire (19).

5. The body-weight-supported walking training machine for animal according to any one of claims 1 to 4, further comprising a stage (42) which is attached to the frame (2) portion in a detachable manner and on which the animal (D) is placed.

6. The body-weight-supported walking training machine for animal according to any one of claims 1 to 4, wherein
the frame portion (2) includes two columns (4) and a beam portion (5) connecting the two columns (5), and
a movable table (37) on which the animal (D) is placed is disposed between the two columns (4) in a movable manner.
